# EUROPÄISCHE PATENTSCHRIFT

(11) **EP 2 974 804 B1**
(45) Veröffentlichungstag und Bekanntmachung des Hinweises auf die Patenterteilung: **04.07.2018**
(21) Anmeldenummer: 15168285.3
(22) Anmeldetag: 20.05.2015
(51) Int. Cl.: B08B 7/00, F27B 14/04, F27B 14/06, C22B 9/04, C22B 9/16, C22B 9/00

(54) **VERFAHREN UND VORRICHTUNG ZUM REINIGEN EINES PORÖSEN WERKSTOFFES**
METHOD AND DEVICE FOR CLEANING A POROUS MATERIAL
PROCEDE ET DISPOSITIF DESTINES AU NETTOYAGE D'UNE MATIERE POREUSE

(30) Priorität: 16.07.2014 AT 504922014
(43) Veröffentlichungstag der Anmeldung: 20.01.2016
(73) Patentinhaber: LKR Leichtmetallkompetenzzentrum Ranshofen GmbH, 5282 Ranshofen (AT)
(72) Erfinder: Simson, Clemens, 5230 Mattighofen (AT)
(74) Vertreter: Wirnsberger, Gernot

(56) Entgegenhaltungen:
- EP-A1- 0 384 987
- EP-A2- 0 450 744
- DE-A1- 19 525 389
- US-A1- 2010 064 849
- US-A1- 2014 083 638

## Beschreibung

Die Erfindung betrifft ein Verfahren zum Reinigen eines porösen, zumindest teilweise, insbesondere überwiegend, metallischen Werkstoffes, gemäß dem Oberbegriff des Anspruchs 1 Weiter betrifft die Erfindung eine Vorrichtung zur Durchführung eines solchen Verfahrens gemäß dem Anspruch 10. In vielen Bereichen der industriellen Fertigung sind hoch belastbare Bauteile gefordert. Ein Fokus liegt dabei auf neuen Werkstoffen, die zwar hoch belastbar, aber auch leichtgewichtig sind. Dies gilt insbesondere für den Automobilbereich, wo eine Gewichtseinsparung mit einer Treibstoffeinsparung einhergeht. Neben Verbundwerkstoffen können dabei für spezielle Applikationen auch poröse Metalle oder Legierungen eingesetzt werden, die für einige Anwendungen ein exzellentes Eigenschaftsprofil aufweisen. Beispielsweise können Stoßdämpfer innen mit Metallschaum ausgekleidet sein.

Ein poröser Werkstoff aus Leichtmetall bzw. einer Leichtmetalllegierung hat den Vorteil, dass dieser leicht sowie mechanisch belastbar ist und gegebenenfalls moderat hohen Temperaturen standhält. Porosität gibt ein Verhältnis zwischen Hohlraumvolumen und Gesamtvolumen eines Werkstoffes an. Je größer dieser Wert ist, desto poröser ist ein Werkstoff. Aufgrund dieser positiven Eigenschaften werden Bauteile aus einem porösen metallischen Werkstoff wie erwähnt im Fahrzeugbau, aber auch in elektronischen Geräten wie Mobiltelefonen und Kameras verbaut und teilweise gegenüber Bauteilen aus einem kompakten metallischen Werkstoff bevorzugt. Um Ressourcen zu schonen und nachhaltig zu wirtschaften, ist es aber erforderlich, die teilweise hohen metallischen Anteile des in einem Bauteil verbauten Werkstoffes zu recyceln bzw. wiederzuverwenden.

Bei Einsatz eines porösen Werkstoffes im Automobilbereich oder in anderen Applikationen aufgrund dessen positiver Eigenschaften wird dessen Porosität bei der Herstellung gezielt eingestellt. Zum Beispiel können Metallschäume aus Aluminium oder Aluminiumlegierungen pulvermetallurgisch oder schmelzmetallurgisch hergestellt werden.

Daneben sind auch Verfahren bekannt, bei welchen ein metallischer Werkstoff ungewollt mit Poren entsteht. Dies trifft vor allem für verschiedene Aufarbeitungsprozesse von zumindest teilweise metallischen Abfällen zu, die durch Sublimation oder Destillation gereinigt werden. Ein poröser Werkstoff entsteht beispielsweise bei einem Prozess zum Reinigen von Leichtmetallabfällen, bei welchem Leichtmetalle aus den Abfällen sublimiert werden und so eine Gasphase bilden, wonach daraus festes Leichtmetall abgeschieden wird. Dieses als Sublimat vorliegende Leichtmetall ist zwar zu Beginn sehr rein, es weist jedoch eine für diesen Prozess ungünstige, poröse Form auf. Aufgrund eines hohen Verhältnisses einer Oberfläche zu einem Volumen oxidiert das so abgeschiedene Leichtmetall rasch wieder und wird somit letztlich wieder mit Oxiden verunreinigt. Aufgabe eines solchen Prozesses ist es jedoch, ein möglichst oxidfreies, kompaktes Halbzeug herzustellen. Dafür muss das abgeschiedene Leichtmetall in der Regel weiter aufgereinigt werden, was nachteilig ist.

Sowohl beim Wiederverwenden eines gezielt hergestellten und eingesetzten porösen Bauteils mit metallischen Anteilen als auch beim Weiterbearbeiten eines beim Aufbereitungsprozess eines zumindest teilweise metallischen Abfalles entstehenden porösen Werkstoffes ist es günstig, wenn dieser verflüssigt wird, um metallische von nicht metallischen Anteilen des Werkstoffes zu trennen.

Ist ein Werkstoff kompakt und ohne nennenswerte Hohlräume ausgebildet, wird dieser zumeist durch Wärmeleitung verflüssigt bzw. aufgeschmolzen, um das Metall von dessen Begleitelementen zu lösen. Diese Verfahren sind jedoch nicht ohne Weiteres auf einen porösen metallischen Werkstoff übertragbar, der außenseitig mit einer Oxidschicht bedeckt ist. Aufgrund der schlechten Wärmeleitung eines solchen Werkstoffes ist unverhältnismäßig viel Energiezufuhr notwendig, um diesen mit aus dem Stand der Technik bekannten Verfahren durch Wärmeleitung zu verflüssigen.

Aufgabe der Erfindung ist es, ein Verfahren der eingangs genannten Art anzugeben, mit welchem poröse, zumindest teilweise metallische Werkstoffe unter Minimierung einer aufzuwendenden Energie und somit kosteneffektiv aufbereitet werden können.

Eine weitere Aufgabe der Erfindung ist es, eine Vorrichtung der eingangs genannten Art anzugeben, mit welcher es möglich ist, eine zum Reinigen eines porösen, zumindest teilweise metallischen Werkstoffes notwendige Energie herabzusetzen und somit kosteneffektiv zu arbeiten.

Die erste Aufgabe wird erfindungsgemäß durch Anspruch 1 gelöst. Ein mit der Erfindung erzielter Vorteil ist insbesondere darin zu sehen, dass ein poröser Werkstoff induktiv mit relativ wenig Energiezufuhr erwärmt und somit z. B. geschmolzen wird. Je poröser ein Werkstoff ausgebildet ist, umso schneller kann ein solcher verflüssigt werden. Bei einem erfindungsgemäßen Verfahren werden in dem in das Behältnis eingebrachten Werkstoff bzw. dessen metallischen Anteilen Wirbelströme induziert, wodurch die metallischen Anteile verflüssigt werden. Die Ausbildung des Behältnisses aus einem nicht leitenden Material ermöglicht einen Energieübertrag von einer Induktionsspule direkt auf den Werkstoff. Dadurch wird die gesamte Energie zum Verflüssigen oder Sublimieren der metallischen Anteile des Werkstoffes genutzt, ohne dass Anteile davon an das Behältnis übertragen werden und die metallischen Anteile des Werkstoffes werden in einer kurzen Zeit verflüssigt. Die induktive Erwärmung bewirkt somit zielgerichtet vornehmlich die rasche Erwärmung der metallischen Anteile, die sich dann leicht von den Verunreinigungen wie Oxide trennen lassen.

Beim Verflüssigen der metallischen Anteile eines porösen Werkstoffes, welcher zumindest teilweise aus Leichtmetallen wie Aluminium oder Magnesium bzw. deren Legierungen besteht, kann nach Erwärmung ein metallischer Anteil dieses Werkstoffes in einer flüssigen Phase vorliegen und die nicht metallischen Anteile des Werkstoffes schwimmen üblicherweise an der Oberfläche des flüssigen Metalls. Somit ermöglicht ein erfindungsgemäßes Verfahren ein Verflüssigen oder Sublimieren sowie ein phasenreines Trennen der metallischen und nicht metallischen Anteile eines porösen, teilweise metallischen Werkstoffes unter effektiver Nutzung der dafür aufzuwendenden Energie in einer kurzen Zeit. Insbesondere können dadurch metallische Anteile eines Leichtmetalls oder einer Leichtmetalllegierung von oberflächlich anhaftenden Oxiden der Leichtmetalle getrennt werden. Bei genügend hohem Energieeintrag und/oder reduziertem Druck kann auch eine Sublimation anstelle der Bildung einer flüssigen Phase erfolgen.

Mit Vorteil vorgesehen ist, dass der ins Behältnis eingebrachte Werkstoff durch einen Energieübertrag von einer Induktionsspule auf die metallischen Anteile des Werkstoffes erwärmt wird, weil die dafür notwendige Energie gering gehalten werden kann. Alternativ kann der Werkstoff bei ausreichend hohem Energieeintrag auch sublimiert und anschließend kondensiert werden. Dabei kann vorgesehen sein, dass die Induktionsspule das Behältnis z. B. spiralförmig ummantelt. Alternativ kann die Induktionsspule auch in einer Wand des Behältnisses integriert sein, wobei eine Innenwand des Behältnisses die Induktionsspule vom darin eingebrachten Werkstoff abtrennt. Dabei wird eine durch Stromfluss erzeugte Wärme zumindest teilweise an das Behältnis abgegeben.

Vorteilhaft kann vorgesehen sein, dass ein Erwärmen des Werkstoffes bis zu einer vorbestimmten Temperatur durchgeführt wird, wobei die Temperatur variabel eingestellt wird, um eine Energiezufuhr so gering wie möglich zu halten. Sobald der Werkstoff eine gewünschte, vorher einstellbare Temperatur erreicht hat, wird dieser nicht weiter erwärmt. Zur Temperaturmessung des Werkstoffes kann ein Temperaturmessgerät vorgesehen sein, welches hohen Temperaturen standhält. Eine Einstellung der zu erreichenden Temperatur ist abhängig davon, wie der Werkstoff zusammengesetzt ist, bzw. wie hoch dessen metallischer Anteil ist und welches Metall vorliegt. Der erforderliche Temperaturpunkt kann auch ein Schmelzpunkt, Verdampfungspunkt oder Sublimationspunkt des Metalls sein, aus welchem der zu verflüssigende Werkstoff zu großen Anteilen ausgebildet ist. Dies richtet sich danach, in welchem Aggregatzustand das Metall aus dem Abfall entfernt werden soll. Erfindungsgemäß wird die Induktionsspule durch eine angeschlossene Wechselstromquelle mit Spannung versorgt, um ein magnetisches Wechselfeld zu erzeugen. Die elektrische Leistung wird aus dem Stromnetz bezogen und anschließend üblicherweise in Gleichstrom umgewandelt. Der Gleichstrom wird dann durch einen Wechselrichter in Einphasen-Wechselstrom mit der gewünschten Frequenz umgewandelt. Der Wechselrichter muss dabei nur die benötigte Wirkleistung liefern. Alternativ kann der notwendige Wechselstrom auch mittels eines Wechselstromgenerators bereitgestellt werden. Erfindungsgemäß ist vorgesehen, dass eine Frequenz und/oder eine Leistung des Wechselfeldes zumindest teilweise automatisiert durch Rückkopplung geändert wird, um eine bestmögliche Durchwirkung des Werkstoffes zu erreichen. Eine Stromeindringtiefe ist von dessen Frequenz abhängig. Dadurch wird durch eine Anpassung der Frequenz die Stromeindringtiefe verändert und dadurch kann auch auf verschieden große Mengen eines Werkstoffes eingegangen werden.

Zweckmäßigerweise ist eine elektronische Regelung vorgesehen, mit welcher die Rückkopplung eines Schwingkreises geregelt wird, wobei der Schwingkreis die Induktionsspule, die Wechselstromquelle und den Werkstoff umfasst. Dabei wird Energie zwischen der Induktionsspule bzw. dem durch diese erzeugten Magnetfeld und somit dem Werkstoff und der Wechselstromquelle periodisch ausgetauscht.

Es kann bevorzugt vorgesehen sein, dass das Behältnis insbesondere luftdicht verschlossen wird, um unerwünschte Reaktionen durch ein Eindringen von Luft zu vermeiden. Insbesondere wird dadurch ein Reagieren mit Sauerstoff und somit ein erneutes Verunreinigen des Metalls zumindest herabgesetzt.

Günstig kann es dabei sein, wenn beim Reinigen ein reduzierter Druck eingestellt wird. Durch eine Erniedrigung des Druckes wird auch eine zum Schmelzen notwendige Temperatur erniedrigt. Beim induktiven Erwärmen bedeutet dies, dass weniger Stromzufuhr und somit weniger Energieaufwand notwendig ist.

Weiter kann bei erniedrigtem Druck auch ein Sublimationsprozess durchgeführt werden. Insbesondere ist ein solches Verfahren unter reduziertem Druck bei einem Reinigungsprozess von Leichtmetallabfällen geeignet. Dabei entsteht bei einem Sublimationsprozess und anschließendem Abscheiden von Leichtmetall in fester Form zunächst unerwünschtes poröses Material, welches aufgrund dessen großer Oberfläche schnell wieder oxidiert. Mit einem erfindungsgemäßen Verfahren kann dieses poröse Material in eine kompakte und reine Form gebracht werden. Vorteilhaft kann vorgesehen sein, dass eine Vorrichtung zum Durchführen eines solchen Verfahrens um eine horizontale Achse des Behältnisses drehbar gelagert ausgebildet ist, da sich das im ersten Schritt gebildete Sublimat an einem oberen Ende dieser sammelt. Um das Sublimat abzutrennen, ist es von Vorteil, wenn die Vorrichtung gedreht wird. Anschließend wird das Sublimat noch aufgeschmolzen, um ein kompaktes, hochreines Halbzeug zu erstellen.

Zweckmäßig kann es sein, wenn beim Reinigen ein Gas in das Behältnis eingeführt wird, um insbesondere bei Leichtmetallen wie Aluminium und Magnesium sowie deren Legierungen ein unerwünschtes Oxidieren zu vermeiden oder zumindest zu verringern. Hierfür werden beispielsweise Schutzgase wie Stickstoff eingesetzt.

Bevorzugt können an einer Unterseite des Behältnisses über eine Auslassöffnung metallische Anteile des verflüssigten Werkstoffes abgeführt werden. Beim Verflüssigen von Leichtmetallen wie Aluminium und Magnesium oder deren Legierungen werden üblicherweise die annähernd reinen metallischen Anteile am Boden des Behältnisses gesammelt und die Verunreinigungen bzw. nicht metallischen Anteile schwimmen auf der flüssigen metallischen Phase. Durch die Auslassöffnung an der Unterseite des Behältnisses lassen sich die flüssigen metallische Anteile in einfacher Weise abführen und können weiter- bzw. wiederverwendet werden.

Verfahrensmäßig kann bevorzugt vorgesehen sein, dass dies im Anschluss eines Reinigungsprozesses von insbesondere Leichtmetallabfällen durchgeführt wird, um reines sowie kompaktes Halbzeug herzustellen. Beispielsweise können in einem ersten Reinigungsschritt erhaltene poröse Leichtmetalle einer weiteren Reinigung unterworfen werden.

Die zweite Aufgabe wird erfindungsgemäß durch Anspruch 10 gelöst. Ein mit der Erfindung erzielter Vorteil ist insbesondere darin zu sehen, dass durch die Anordnung einer Induktionsspule und somit durch die induktive Erwärmung des porösen Werkstoffes dieser mit relativ geringer Energiezufuhr auftrennbar ist. Die Induktionsspule kann dabei das Behältnis ummantelnd angeordnet sein und erzeugt ein Magnetfeld, welches Wirbelströme in den metallischen Anteilen des Werkstoffes erzeugt und diese dadurch erwärmt und verflüssigt bzw. verdampft. Weil das Behältnis aus einem elektrisch nicht leitenden Material gebildet ist, erfolgt die Erzeugung der Wirbelströme direkt in den metallischen Anteilen des Werkstoffes. Das Behältnis ist somit wesentlich für ein energieeffizientes Verflüssigen eines porösen, zumindest teilweise metallischen Werkstoffes, da nur dieser erwärmt wird und andere Bestandteile der Vorrichtung kaum Energie aufnehmen. Da die Induktion an einer Oberfläche der metallischen Anteile am stärksten ist, kommt es auch zu einer raschen Abtrennung oxidischer Anteile, was für eine rasche Verfahrensführung und damit einen geringen Energieeintrag günstig ist. Alternativ kann auch vorgesehen sein, dass die Induktionsspule in einer Wand des Behältnisses integriert ist, um eine Abgabe einer durch den Stromfluss erzeugten Wärme an das Behältnis zu ermöglichen, wobei eine Innenseite der Wand des Behältnisses die Induktionsspule vom dem in das Behältnis eingebrachten Werkstoff abtrennt.

Mit Vorteil ist dabei eine Wechselstromquelle vorgesehen, welche die Induktionsspule mit Strom versorgt, um ein magnetisches Wechselfeld zu erzeugen. Die Wechselstromquelle umfasst üblicherweise einen Gleichrichter und einen daran schließenden Wechselrichter, um aus Netzstrom einen Einphasen-Wechselstrom mit einer gewünschten Frequenz zu erzeugen. Alternativ kann auch ein Wechselstromgenerator zur Stromerzeugung vorgesehen sein. Erfindungsgemäß ist eine elektronische Regelung vorgesehen, mit welcher eine Rückkopplung eines Schwingkreises aus der Induktionsspule, einer Wechselstromquelle und den Werkstoff regelbar ist. Dadurch ist Energie zwischen der Induktionsspule bzw. dem Werkstoff und der Wechselstromquelle periodisch austauschbar. Durch die Rückkopplung und deren elektronischer Regelung ist eine Stromstärke auf den Werkstoff bzw. dessen metallische Anteile anpassbar.

Bevorzugt kann das Behältnis mit einem Verschluss ausgebildet sein, um dieses gegebenenfalls luftdicht zu verschließen und dadurch vor Einflüssen von außen bzw. vor unerwünschten Reaktionen mit Luft, insbesondere mit Sauerstoff, zu schützen.

Dabei kann es günstig sein, wenn eine Vakuumeinrichtung vorgesehen ist, mit welcher das Behältnis evakuierbar ist. Beim Einstellen eines erniedrigten Druckes im Behältnis ist auch die Temperatur herabsetzbar, welche zum Verflüssigen eines porösen Werkstoffes notwendig ist. Je nach gewünschtem Druck kann die Vakuumeinrichtung eine oder mehrere Vakuumpumpen umfassen, welche an das Behältnis anschließbar sind, um dieses zu evakuieren. Bevorzugt kann eine solche Vorrichtung mit einer Vakuumeinrichtung drehbar gelagert ausgebildet sein, um das bei einem Reinigungsprozess von insbesondere Leichtmetallabfällen gegebenenfalls an einem oberen Ende des Behältnisses entstehende poröse Sublimat nach Aufschmelzen in ein kompaktes Halbzeug zu überführen.

Von Vorteil kann es dabei weiter sein, wenn am Behältnis ein Einlass für Gas angeordnet ist. Der Einlass kann dabei mit einem Ventil ausgebildet sein, sodass ein Zuführen von Gas optional ist. Das zugeführte Gas dient in der Regel als Schutzgas, um eine Oxidation der abgetrennten metallischen Anteile zu verhindern.

Bevorzugt kann weiter vorgesehen sein, dass an einer Unterseite des Behältnisses eine Auslassöffnung angeordnet ist. Die Auslassöffnung ist dabei verschließbar ausgebildet und kann bei Bedarf geöffnet werden, um verflüssigte metallische Anteile, welche sich am Boden des Behältnisses sammeln, aus dem Behältnis auszuscheiden und weiterzuverwenden. Nicht metallische Anteile bzw. Verunreinigungen eines zumindest teilweise aus Leichtmetallen, insbesondere überwiegend, bestehenden Werkstoffes lagern sich üblicherweise oberhalb der leichtmetallischen Anteile ab und sind somit von diesen trennbar. Beim Erwärmen bzw. Verflüssigen des porösen Werkstoffes bleibt die Auslassöffnung verschlossen, um ein ungewolltes Austreten des Werkstoffes oder Anteilen davon zu verhindern.

Günstig ist es, wenn ein Temperaturmessgerät vorgesehen ist, mit welchem eine Temperatur des Werkstoffes bestimmbar ist, um eine Zeitdauer der Induktionserwärmung zu bestimmen. Eine Erwärmung des Werkstoffes erfolgt bis zu einem erforderlichen, vorgegebenen Temperaturpunkt, welcher variabel einstellbar ist. Dieser Temperaturpunkt kann der Schmelz-, Verdampfungs- oder Sublimationspunkt der metallischen Anteile des Werkstoffes sein. Vorteilhaft ist vorgesehen, dass das Temperaturmessgerät hohen Temperaturen standhält und mit diesem Messungen über einen großen Temperaturbereich mit annähernd konstanter Genauigkeit durchführbar sind.

Eine Verwendung einer erfindungsgemäßen Vorrichtung erfolgt mit Vorteil beim Aufschmelzen von verunreinigten, porösen Leichtmetallen und/oder deren Legierungen.

Weitere Merkmale, Vorteile und Wirkungen ergeben sich aus dem nachfolgend dargestellten Ausführungsbeispiel. In der Zeichnung, auf welche dabei Bezug genommen wird, zeigt:

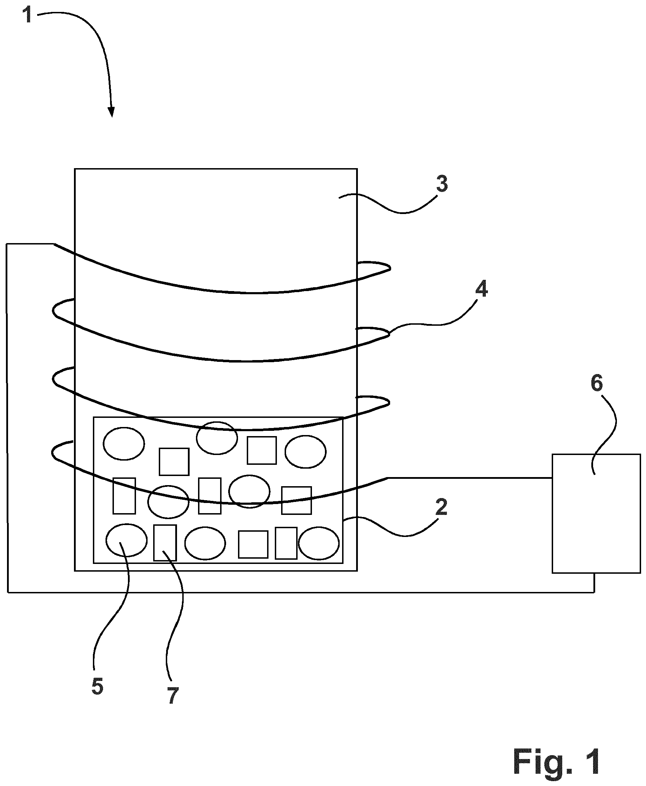

Fig. 1 eine erfindungsgemäße Vorrichtung in stark schematisierter Darstellung.

Fig. 1 zeigt eine erfindungsgemäße Vorrichtung 1 zum Verflüssigen insbesondere eines porösen Werkstoffes 2, welcher zumindest teilweise aus Leichtmetallen und/oder deren Legierungen besteht. Insbesondere kann der Werkstoff 2 zumindest teilweise aus Aluminium oder Magnesium oder deren Legierungen gebildet sein. Neben metallischen Anteilen 5 des Werkstoffes 2 umfasst dieser nicht metallische Anteile 7, wie beispielsweise Verunreinigungen wie Oxide, was stark schematisiert angedeutet ist. Die Vorrichtung 1 umfasst ein aus einem elektrisch nicht leitenden Material gebildetes Behältnis 3, welches mit einem Verschluss ausgebildet sein kann. Weiter ist eine Induktionsspule 4 vorgesehen, welche das Behältnis 3 außenseitig spiralförmig ummantelt, wobei die Induktionsspule 4 am Behältnis 3 anliegen kann. Alternativ kann auch vorgesehen sein, dass die Induktionsspule 4 in einer Wand des Behältnisses 3 integriert ist. Die Induktionsspule 4 wird von einer Wechselstromquelle 6 mit Strom gespeist, um ein magnetisches Wechselfeld zu erzeugen. Als Wechselstromquelle 6 kann dabei ein Wechselstromgenerator vorgesehen sein. Erfindungsgemäß kann jedoch auch Strom aus dem Stromnetz genutzt werden, welcher durch einen Gleichrichter und daran anschließenden Wechselrichter zur Induktionsspule 4 geleitet wird. Weiter ist eine elektronische Regelung vorgesehen, mit welcher eine Rückkopplung eines Schwingkreises regelbar ist. Der Schwingkreis umfasst dabei den Werkstoff 2, die Induktionsspule 4 und die Wechselstromquelle 6.

Erfindungsgemäß kann auch vorgesehen sein, dass das Behältnis 3 an einer Unterseite mit einer Auslassöffnung ausgebildet ist. Weiter kann das Behältnis 3 so ausgebildet sein, dass dieses an eine Vakuumeinrichtung und/oder an eine Gasanspeisung anschließbar ist. Nützlich ist es darüber hinaus, wenn im Behältnis 3 ein Temperaturmessgerät angeordnet ist, welches eine Temperatur des Werkstoffes 2 misst.

Bei einem erfindungsgemäßen Verfahren wird der poröse Werkstoff 2 in das Behältnis 3 eingebracht. Die Induktionsspule 4, welche um das Behältnis 3 spiralförmig umwickelt geführt ist, wird durch die Wechselstromquelle 6 mit Strom versorgt und erzeugt ein Magnetfeld, welches in den metallischen Anteilen 5 des Werkstoffes 2 Wirbelströme induziert und diese dadurch erwärmt bzw. verflüssigt. Die nicht metallischen Anteile 7 werden aufgrund der steigenden Temperatur im Behältnis 3 gleichzeitig miterwärmt, aber nicht verflüssigt. Da das Behältnis 3 aus einem elektrisch nicht leitenden Material ausgebildet ist, erzeugt das Magnetfeld die Wirbelströme direkt in den metallischen Anteilen 5 des Werkstoffes 2. Die Erwärmung des porösen Werkstoffes 2 erfolgt üblicherweise bis zu einer erforderlichen, vorgegebenen Temperatur. Diese kann beispielsweise der Schmelzpunkt der metallischen Anteile 5 sein und kann je nach vorhandenem Metall im Werkstoff 2 eingestellt und abgeändert werden. Die Temperatur wird mit Vorteil mit dem Temperaturmessgerät gemessen.

Die Wechselstromquelle 6 bildet zusammen mit der Induktionsspule 4 und dem Werkstoff 2 einen Schwingkreis. Eine Rückkopplung dieses Schwingkreises ist mit einer elektronischen Regelung regelbar und kann somit immer auf die jeweiligen Bedingungen im Behältnis 3 angepasst werden. Außerdem kann vorgesehen sein, dass eine Frequenz der Wechselstromquelle 6 zumindest teilweise automatisiert durch die Rückkopplung angepasst bzw. verändert wird. Die Frequenz beeinflusst eine Stromeindringtiefe und ist demnach von der Masse und der Zusammensetzung bzw. Porosität des Werkstoffes 2 abhängig. Darüber hinaus kann auch vorgesehen sein, dass die Frequenz moduliert wird, um eine bestmögliche Durchwirkung des Werkstoffes 2 zu erreichen und dessen metallische Anteile in einer möglichst kurzen Zeit möglichst vollständig zu verflüssigen.

Soll der Werkstoff 2 bei einer niedrigeren Temperatur geschmolzen werden oder stattdessen sublimiert und kondensiert werden, ist es zweckmäßig, das Behältnis 3 luftdicht zu verschließen und dieses mit einer Vakuumeinrichtung in Verbindung zu setzen. Die Vakuumeinrichtung kann dabei eine oder mehrere Vakuumpumpen umfassen, welche einen Druck in dem Behältnis 3 erniedrigen. Zudem kann es günstig sein, wenn dem Werkstoff 2 im Behältnis 3 beim Verflüssigen ein Gas zugeführt wird. Dazu kann ein Einlass für dieses Gas vorgesehen sein, welcher beispielsweise mit einem Ventil geöffnet bzw. geschlossen wird.

Sobald der Werkstoff 2 eine vorgegebene Temperatur erreicht hat, wird dieser verflüssigt. Beim Verflüssigen eines porösen Werkstoffes 2, welcher zumindest teilweise aus Leichtmetallen bzw. Nicht-Eisen-Metallen besteht, wandern die nicht metallischen Anteile 7 des Werkstoffes 2 an die Oberfläche und die metallischen Anteile 5 sammeln sich am Boden des Behältnisses 3. Sollen diese flüssigen, metallischen Anteile 5 abgeführt und anschließend weiterverwendet werden, ist es zweckmäßig, dass dieser Vorgang durch die an der Unterseite des Behältnisses 3 angeordnete Auslassöffnung erfolgt.

Es kann auch vorgesehen sein, dass das erfindungsgemäße Verfahren im Anschluss eines Reinigungsprozesses von insbesondere verunreinigten Leichtmetallabfällen wie Aluminium und Magnesium und/oder deren Legierungen durchgeführt wird. Dabei wird das bei einem solchen Prozess porös abgeschiedene Metall in einer kurzen Zeitspanne mit einer Oxidschicht überzogen und somit wieder verunreinigt. Um daraus eine kompakte Form annähernd reiner metallischer Anteile 5 herzustellen, ist ein erfindungsgemäßes Verfahren im Besonderen geeignet. Darüber hinaus kann auch vorgesehen sein, dass der Reinigungsprozess und das Verflüssigen des dabei entstehenden porösen Werkstoffes 2 im selben Behältnis 3 durchgeführt werden.

Bei geeigneten Bedingungen kann anstelle einer Verflüssigung der metallischen Anteile 5 auch eine Sublimation erfolgen. Hierfür kann unter reduziertem Druck gearbeitet werden.

Das erfindungsgemäße Verfahren lässt sich insbesondere auf Abfälle wie Schrott anwenden, kann aber auch zur Extraktion von Metallen angewendet werden, bei welchen die metallischen Anteile gering sind, beispielsweise zur Gewinnung metallischer Anteile 5 aus Krätzen oder Schlacken.

## Patentansprüche

1. Verfahren zum Reinigen eines porösen, zumindest teilweise, insbesondere überwiegend, metallischen Werkstoffes (2), welcher zumindest teilweise, insbesondere überwiegend, aus Leichtmetallen und/oder deren Legierungen besteht, wobei der Werkstoff (2) in ein Behältnis (3) eingebracht und in diesem erwärmt wird, wobei der Werkstoff (2) in einem aus einem nicht leitenden Material gebildeten Behältnis (3) durch eine Innenseite des Behältnisses (3) hindurch durch einen Energieübertrag von einer Induktionsspule (4) direkt auf den Werkstoff (2) induktiv erwärmt wird, **dadurch gekennzeichnet dass** die Induktionsspule (4) durch eine angeschlossene Wechselstromquelle (6) mit Spannung versorgt wird, um ein magnetisches Wechselfeld zu erzeugen, wobei eine Frequenz und/oder eine Leistung des Wechselfeldes zumindest teilweise automatisiert durch Rückkopplung geändert wird.

2. Verfahren nach Anspruch 1, **dadurch gekennzeichnet, dass** der ins Behältnis (3) eingebrachte Werkstoff (2) durch einen Energieübertrag von einer Induktionsspule (4) auf die metallischen Anteile (5) des Werkstoffes (2) erwärmt wird.

3. Verfahren nach Anspruch 2, **dadurch gekennzeichnet, dass** der Energieeintrag durch eine das Behältnis (3) ummantelnde Induktionsspule (4) erzeugt wird.

4. Verfahren nach einem der Ansprüche 1 bis 3, **dadurch gekennzeichnet, dass** eine elektronische Regelung vorgesehen ist, mit welcher die Rückkopplung eines Schwingkreises geregelt wird, wobei der Schwingkreis die Induktionsspule (4), die Wechselstromquelle (6) und den Werkstoff (2) umfasst.

5. Verfahren nach einem der Ansprüche 1 bis 4, **dadurch gekennzeichnet, dass** das Behältnis (3) insbesondere luftdicht verschlossen wird.

6. Verfahren nach Anspruch 5, **dadurch gekennzeichnet, dass** beim Reinigen ein reduzierter Druck eingestellt wird.

7. Verfahren nach einem der Ansprüche 1 bis 6, **dadurch gekennzeichnet, dass** beim Reinigen ein Gas in das Behältnis (3) eingeführt wird.

8. Verfahren nach einem der Ansprüche 1 bis 7, **dadurch gekennzeichnet, dass** an einer Unterseite des Behältnisses (3) über eine Auslassöffnung metallische Anteile (5) des verflüssigten Werkstoffes (2) abgeführt werden.

9. Verfahren nach einem der Ansprüche 1 bis 8, **dadurch gekennzeichnet, dass** dieses im Anschluss eines Reinigungsprozesses von insbesondere Leichtmetallabfällen durchgeführt wird.

10. Vorrichtung (1) zum Reinigen eines porösen, zumindest teilweise, insbesondere überwiegend, metallischen Werkstoffes (2), welcher zumindest teilweise, insbesondere überwiegend, aus Leichtmetallen und/oder deren Legierungen besteht, zur Durchführung eines Verfahrens nach einem der Ansprüche 1 bis 9, umfassend ein Behältnis (3) zur Aufnahme und Erwärmung des Werkstoffes (2), wobei eine Induktionsspule (4) vorgesehen ist, mit welcher der in das Behältnis (3) eingebrachte Werkstoff (2) durch eine Innenseite des Behältnisses (3) hindurch induktiv erwärmbar ist, wobei das Behältnis (3) aus einem nicht leitenden Material ausgebildet ist, wobei eine elektronische Regelung vorgesehen ist, mit welcher eine Rückkopplung eines Schwingkreises aus der Induktionsspule (4), einer Wechselstromquelle (6) und dem Werkstoff (2) regelbar ist, wobei eine Frequenz und/oder eine Leistung des Wechselfeldes zumindest teilweise automatisiert durch Rückkopplung geändert wird.

11. Vorrichtung (1) nach Anspruch 10, **dadurch gekennzeichnet, dass** das Behältnis (3) mit einem Verschluss ausgebildet ist.

12. Vorrichtung (1) nach Anspruch 11, **dadurch gekennzeichnet, dass** eine Vakuumeinrichtung vorgesehen ist, mit welcher das Behältnis (3) evakuierbar ist.

## Claims

1. A method for cleaning a porous, at least partially, in particular predominantly, metallic material (2) which comprises at least partially, in particular predominantly, light metals and/or alloys thereof, wherein the material (2) is introduced into a container (3) and heated therein, wherein the material (2) is heated inductively in a container (3) formed from a non-conductive material through an inside of the container (3) through a transfer of energy from an induction coil (4) straight onto the material (2), **characterized in that** the induction coil (4) is energized by an attached alternating current source (6) in order to generate an alternating magnetic field, wherein a frequency and/or an output of the alternating field is/are changed in an at least partially automated manner by feedback.

2. The method according to claim 1, **characterized in that** the material (2) introduced into the container (3) is heated by an energy transfer from an induction coil (4) to the metallic fractions (5) of the material (2).

3. The method according to claim 2, **characterized in that** the energy input is generated by an induction coil (4) enclosing the container (3).

4. The method according to one of claims 1 to 3, **characterized in that** an electronic control is provided with which the feedback of an oscillating circuit is controlled, wherein the oscillating circuit comprises the induction coil (4), the alternating current source (6) and the material (2).

5. The method according to one of claims 1 to 4, **characterized in that** the container (3) is closed, in particular in an airtight manner.

6. The method according to claim 5, **characterized in that** a reduced pressure is set during cleaning.

7. The method according to one of claims 1 to 6, **characterized in that** a gas is introduced into the container (3) during cleaning.

8. The method according to one of claims 1 to 7, **characterized in that** metallic fractions (5) of the liquefied material (2) are removed on an underside of the container (3) via an outlet opening.

9. The method according to one of claims 1 to 8, **characterized in that** this is carried out following a cleaning process of light metal waste, in particular.

10. A device (1) for cleaning a porous, at least partially, in particular predominantly, metallic material (2) which is made at least partially, in particular predominantly, from light metals and/or alloys thereof, for performing a method according to one of claims 1 to 9, comprising a container (3) for receiving and heating the material (2), wherein an induction coil (4) is provided with which the material (2) introduced into the container (3) can be heated inductively through an inside of the container (3), wherein the container (3) is formed from a non-conductive material, wherein an electronic control is provided with which a feedback of an oscillating circuit made up of the induction coil (4), an AC current source (6) and the material (2), wherein a frequency and/or an output of the alternating field is changed at least in part in an automated fashion by feedback.

11. The device (1) according to claim 10, **characterized in that** the container (3) is configured with a lock.

12. The device (1) according to claim 11, **characterized in that** a vacuum device is provided with which the container (3) can be evacuated.

## Revendications

1. Procédé de nettoyage d'un matériau poreux, au moins en partie, en particulier essentiellement métallique (2), lequel est composé au moins en partie, en particulier essentiellement de métaux légers et/ou d'alliages de ceux-ci, le matériau (2) étant introduit dans un contenant (3) et réchauffé dans celui-ci, le matériau (2) étant chauffé de façon inductive dans un contenant (3) formé d'un matériau non conducteur à travers un côté intérieur du contenant (3) par un transfert d'énergie d'une bobine d'induction (4) directement sur le matériau (2), **caractérisé en ce que** la bobine d'induction (4) est alimentée en tension par une source de courant alternative (6) connectée, pour produire un champ alternatif magnétique, une fréquence et/ou une puissance du champ alternatif étant modifiée par rétrocouplage de manière au moins en partie automatisée.

2. Procédé selon la revendication 1, **caractérisé en ce que** le matériau (2) introduit dans le contenant (3) est réchauffé par un transfert d'énergie d'une bobine d'induction (4) sur les parties métalliques (5) du matériau (2).

3. Procédé selon la revendication 2, **caractérisé en ce que** l'apport en énergie est produit par une bobine d'induction (4) enveloppant le contenant (3).

4. Procédé selon l'une quelconque des revendications 1 à 3, **caractérisé en ce qu'**une régulation électronique est prévue avec laquelle le rétrocouplage d'un circuit oscillant est régulé, le circuit oscillant comprenant la bobine d'induction (4), la source de courant alternatif (6) et le matériau (2).

5. Procédé selon l'une quelconque des revendications 1 à 4, **caractérisé en ce que** le contenant (3) est fermé en particulier étanche à l'air.

6. Procédé selon la revendication 5, **caractérisé en ce qu'**une pression réduite est réglée lors du nettoyage.

7. Procédé selon l'une quelconque des revendications 1 à 6, **caractérisé en ce qu'**un gaz est introduit dans le contenant (3) lors du nettoyage.

8. Procédé selon l'une quelconque des revendications 1 à 7, **caractérisé en ce que** des portions métalliques (5) du matériau liquéfié (2) sont évacuées sur un côté inférieur du contenant (3) par une ouverture d'évacuation.

9. Procédé selon l'une quelconque des revendications 1 à 8, **caractérisé en ce que** celui-ci est exécuté en complément d'un processus de nettoyage des déchets de métaux légers particuliers.

10. Dispositif (1) pour le nettoyage d'un matériau poreux, au moins en partie, en particulier essentiellement métallique (2), lequel est composé au moins en partie, en particulier essentiellement de métaux légers et/ou d'alliages de ceux-ci, pour l'exécution d'un procédé selon l'une quelconque des revendications 1 à 9, comprenant un contenant (3) pour recevoir et chauffer le matériau (2), une bobine d'induction (4) étant prévue avec laquelle le matériau (2) introduit dans le contenant (3) peut être réchauffé de façon inductive à travers un côté intérieur du contenant (3), le contenant (3) étant constitué d'un matériau non conducteur, une régulation électronique étant prévue avec laquelle un rétrocouplage d'un circuit oscillant peut être régulé à partir de la bobine d'induction (4), d'une source de courant alternatif (6) et du matériau (2), une fréquence et/ou une puissance du champ alternatif étant modifiée par rétrocouplage de manière au moins en partie automatisée.

11. Dispositif (1) selon la revendication 10, **caractérisé en ce que** le contenant (3) est constitué avec une fermeture.

12. Dispositif (1) selon la revendication 11, **caractérisé en ce qu'**un système sous vide est prévu avec lequel le contenant (3) peut être évacué.
